# EUROPEAN PATENT SPECIFICATION

(11) **EP 3 982 606 B1**
(45) Date of publication and mention of the grant of the patent: **30.11.2022**
(21) Application number: 20200447.9
(22) Date of filing: 07.10.2020
(51) Int. Cl.: H04W 12/06, H04W 12/0431, H04W 12/069, H04L 9/40

(54) **METHOD, DEVICES AND COMPUTER PROGRAM PRODUCT FOR INITIAL AUTHENTICATION OF A MOBILE CLIENT COMMUNICATION DEVICE TO A BOOTSTRAP SERVER**
VERFAHREN, VORRICHTUNGEN UND COMPUTERPROGRAMMPRODUKT ZUR ANFÄNGLICHEN AUTHENTIFIZIERUNG EINER MOBILEN CLIENT-KOMMUNIKATIONSVORRICHTUNG AN EINE BOOTSTRAP-SERVERINSTANZ
PROCÉDÉ, DISPOSITIFS ET PRODUIT PROGRAMME INFORMATIQUE D'AUTHENTIFICATION INITIALE D'UN DISPOSITIF DE COMMUNICATION MOBILE À UN SERVEUR D'AMORÇAGE

(43) Date of publication of application: 13.04.2022
(73) Proprietor: Deutsche Telekom AG, 53113 Bonn (DE)
(72) Inventor: LORENZ, Andreas, Dr., 53332 Bornheim (DE); VORNHOLT, Kolja, 53113 Bonn (DE); KRAUTSCHEID, Thorsten, Dr., 53842 Troisdorf-Spich (DE); AMRAUE, Yassine, 53844 Troisdorf (DE)
(74) Representative: Schwöbel, Thilo K.

(56) References cited:
- WO-A1-2006/084183
- WO-A1-2018/190854
- US-B1- 10 448 251

## Description

### BACKGROUND

The present invention relates a method for initial authentication, with respect to a bootstrap server entity of a mobile communication network, of a client communication device and/or of a subscriber identity module within the client communication device, wherein after the initial authentication, the client communication device is enabled or initialized to operationally communicate with the mobile communication network, wherein a device identifier information is assigned to the client communication device.

Furthermore, the present invention relates to a system for initial authentication, with respect to a bootstrap server entity of a mobile communication network, of a client communication device and/or of a subscriber identity module within the client communication device, wherein after the initial authentication, the client communication device is enabled or initialized to operationally communicate with the mobile communication network, wherein a device identifier information is assigned to the client communication device.

Additionally, the present invention relates to a client communication device and a bootstrap server entity for initial authentication, with respect to a bootstrap server entity of a mobile communication network, of the client communication device and/or of a subscriber identity module within the client communication device, wherein after the initial authentication, the client communication device is enabled or initialized to operationally communicate with the mobile communication network, wherein a device identifier information is assigned to the client communication device.

Furthermore, the present invention relates to a program and to a computer-readable medium for transmitting and/or for using a profile information or at least parts thereof according to the inventive method.

There are more and more communication services and devices relying on mobile communication networks, and therefore the need to reliably distribute credentials to provide access to these networks, typically using subscriber identity modules.

However, especially in case that the subscriber identity module elements are manufactured independently from the client communication devices (such as an internet-of-things devices) with which such subscriber identity module elements might be or are potentially used, it needs to be assured that at least some data or pieces of information - such as, e.g., pre-shared key data - are able to be assigned uniquely and unambiguously to a specific subscriber identity module.

Especially, data on the subscriber identity module (or subscriber identity module element) are often not known at the time of production (and/or by the manufacturer) of a client communication device or an internet-of-things device (with which that subscriber identity module shall be used); such devices typically need to be able to be used subsequently with different types of subscriber identity modules, especially of different manufacturers or related to different mobile network operators. Likewise, it is often the case that device-specific data (of a client communication device, especially an internet-of-things device) is not known at the time of production (and/or by the manufacturer) of the subscriber identity module (or subscriber identity module element); nevertheless, the subscriber identity module needs to be able to be used subsequently in any type of client communication device (e.g. a cell phone, an internet-of-things device, etc.).

In case that pre-shared key data are used to provide security for the use of a specific subscriber identity module or subscriber identity module element (and the associated client communication device or internet-of-things device) such data need to be unique, i.e. a different set of data needs to be used for each subscriber identity module (element) (or for different subscriber identity modules). Hence, the mass production of subscriber identity modules or subscriber identity module elements is made more expensive by such an additional, potentially complex process step which could potentially be difficult to automate.

### SUMMARY

The claimed invention relates to a method, a system, a client communication device, a bootstrap server entity, a computer program and a medium carrying instructions as defined in independent claims 1 and 10-14, respectively. Particular embodiments are defined in the dependent claims.

The object of the present invention is achieved by a method for initial authentication, with respect to a bootstrap server entity of a telecommunications network, of a client communication device and/or of a subscriber identity module within the client communication device, wherein after the initial authentication, the client communication device is enabled or initialized to operationally communicate with the mobile communication network, wherein a device identifier information is assigned to the client communication device,
wherein the method comprises the following steps:
-- in a first step, a pre-shared key identifier information is stored to a subscriber identity module element as well as transmitted to the bootstrap server entity,
-- in a second step, subsequent to the first step, the subscriber identity module element is associated with or built in or assigned to the client communication device as its subscriber identity module,
-- in a third step, subsequent to the second step, the client communication device with its subscriber identity module initially communicates with the bootstrap server entity and transmits the device identifier information and the pre-shared key identifier information to the bootstrap server entity, wherein the client communication device and/or the subscriber identity module within the client communication device is initially authenticated by the bootstrap server entity in case that the pre-shared key identifier information is verified by the bootstrap server entity.

It is thereby advantageously possible according to the present invention that a subscriber identity module or subscriber identity module element is able to be used as a means of transporting pre-shared key data or pre-shared key data sets in an efficient manner. When using the subscriber identity module or subscriber identity module element to transport pre-shared key data, precisely the same data (exactly) needs to be written and stored on the subscriber identity module (or subscriber identity module module) on the one hand, and, on the other hand, in a memory part of (or accessible to) the bootstrap server. This is especially cumbersome and requires additional efforts in case that data being potentially on the subscriber identity module or subscriber identity module element are not known at the time of production of the corresponding client communication device (especially an internet-of-things device); nevertheless, these devices need to function or work together, subsequently, with the subscriber identity modules of different mobile operators. Likewise, device-specific data is not known at the time of production of the subscriber identity module or subscriber identity module element; however, such subscriber identity modules (or subscriber identity module elements) need to function or work together in any type of cell phone (or client communication device, especially an internet-of-things device).

Typically and conventionally, manufacturers of subscriber identity modules or subscriber identity module elements (i.e. subscriber identity module manufacturers), and mobile communication networks (i.e. telecommunications providers) exchange identification numbers of produced subscriber identity modules (or subscriber identity module elements), as well as other information or pieces of information being specific to the subscriber identity module. In case that pre-shared key information is used to authenticate communication endpoints during the bootstrap process (i.e. upon initially booting (i.e. switching on) a client communication device that needs thereby to be initially authenticated with respect to a bootstrap server entity), a mechanism is required for exchanging such pre-shared key information or pre-shared key records between the bootstrap server entity, on the one hand, and the bootstrap client (i.e. the client communication device or internet-of-things device) on the other hand.
If a bootstrap server shall be used (e.g. provided by a telecommunications provider (i.e. typically by a mobile communication network)), one possibility is to use random or generic pre-shared key information (or pre-shared key records) and exchange such pre-shared key information (or pre-shared key records) with the bootstrap clients (i.e. the respective client communication devices or internet-of-things devices).
According to the present invention, pre-shared key information or pre-shared key records are used that are based on data or pieces of information that is specific to the respective subscriber identity module used within the client communication device, i.e. these pre-shared key records or this pre-shared key information is preferably based on one or a plurality of identifiers of the subscriber identity module and/o on subscriber-identity-module-specific data, e.g. IMSI, ICCID or MSISDN.
In case the subscriber identity module shall be used to transport pre-shared key data records (or pre-shared key pieces of information) - e.g. by means of a corresponding implementation by a telecommunications provider-, such pre-shared key data records need be exchanged between the SIM describing instance - usually the manufacturer of the subscriber identity module -, and the operator of the bootstrap server entity before such pre-shared key data records can be used. Data based on the identification of the subscriber identity module, on the other hand, is already known to the subscriber identity module manufacturer and is made available by default to the telecommunications provider (i.e. typically the mobile communication network providing the bootstrap server entity) for whose customers the subscriber identity module has been manufactured. Due to the fact that, typically, the mobile communication network (or telecommunications provider) lacks device information regarding the client communication device (especially in case of internet-of-things devices), the generation of pre-shared key data records typically involves increased efforts if such pre-shared key data records should be based on such device information. Additionally, as the processes for exchanging randomly generated pre-shared key data records require a secure exchange of these data between the subscriber identity module writing instance (i.e. typically the manufacturer of the subscriber identity module or subscriber identity module element) and the operator of the bootstrap server entity (especially the mobile communication network operator), and as these pre-shared key data records necessarily need to be unique (unambiguous) for each subscriber identity module or subscriber identity module element, a different data set needs to be used for each individual subscriber identity module or subscriber identity module element, and, hence, the mass production of subscriber identity modules is made more expensive by this additional, comparably complex process step (that is typically difficult to automate).

According to the present invention, it is proposed to use pre-shared key information (a pre-shared key identifier information and a pre-shared key secret information), especially subscriber-identity-module-specific information, that is linked to (or assigned to or associated with) the subscriber identity module or subscriber identity module element, in or by the bootstrap server entity. The pre-shared key information is likewise stored in or to the subscriber identity module element (upon its manufacture, i.e. prior to it being associated to the client communication device, and especially without knowledge which specific client communication device (or client communication device type) will be associated with the respective subscriber identity module element.

According to the present invention, upon or after the subscriber identity module element being associated with or built in or assigned to the client communication device as its subscriber identity module, there is a bootstrap procedure involving an initial authentication of the client communication device and the associated subscriber identity module towards the mobile communication network, especially towards the bootstrap server entity. This bootstrap procedure or initial authentication, involves the client communication device (with its subscriber identity module) initially communicating with the bootstrap server entity and transmitting the device identifier information, the pre-shared key identifier information, and the pre-shared key secret information to the bootstrap server entity. The client communication device and/or the subscriber identity module within the client communication device is initially authenticated by the bootstrap server entity in case that both the pre-shared key identifier information and the pre-shared key secret information is verified by the bootstrap server entity.

According to the present invention, for security reasons, not all identifiers based on identifiers of the subscriber identity module are suitable as secret identifiers. Typically, such identifiers have a comparatively low entropy, some sections are determined by country and provider identifiers, and, typically, the structure of the entire identifier is known. All these identifiers are easy to guess in the context of 3GPP communication. In addition, valid (neighboring) instances might be guessed by simply counting up or down by a known instance.

According to the present invention, it is advantageously possible and preferred that the pre-shared key identifier information and/or the pre-shared key secret information corresponds to or is derived from one or a plurality of, or comprises at least part of, subscriber-identity-module-specific pieces of information of the subscriber identity module element, wherein the subscriber-identity-module-specific pieces of information of the subscriber identity module element especially comprise the following pieces of information:
-- the first personal identification number, PIN1, of the subscriber identity module element,
-- the second personal identification number, PIN2, of the subscriber identity module element,
-- the first personal unblocking key, PUK1, of the subscriber identity module element,
-- the second personal unblocking key, PUK2, of the subscriber identity module element,
-- the international mobile subscriber information, IMSI, of the subscriber identity module element,
-- the integrated circuit card identifier, ICCID, of the subscriber identity module element,
-- the mobile station international subscriber directory number, MSISDN, of the subscriber identity module element.

It is thereby advantageously possible to implement a secure and efficient procedure to use subscriber-identity-module-specific information for an initial authentication of the client communication device.

According to the present invention, it is advantageously furthermore possible and preferred that at least the pre-shared key secret information corresponds to or is derived from subscriber-identity-module-specific pieces of information of the subscriber identity module element in encrypted form, wherein especially the encryption of the subscriber-identity-module-specific pieces of information is performed using a secret key information known to both the manufacturer of the subscriber identity module element and at least one of the bootstrap server entity and the telecommunications network.

It is thereby advantageously possible according to the present invention to enhance the security level individually for each subscriber identity module of a plurality of different subscriber identity modules without the need to individually exchange pieces of information between the manufacturer of the subscriber identity module and the mobile communication network.

According to the present invention, it is furthermore advantageously possible and preferred that in the first step a pre-shared key secret information - besides the pre-shared key identifier information - is stored to the subscriber identity module element as well as transmitted to the bootstrap server entity,
wherein the pre-shared key secret information is used to establish a secure communication channel between the client communication device and the bootstrap server entity, especially during the third step to initially transmit the device identifier information, and the pre-shared key identifier information to the bootstrap server entity.

It is thereby advantageously possible to use the pre-shared key secret information to establish a secure and/or confidential communication channel, especially a tunnel or a transport layer security, TLS, tunnel between the client communication device and the bootstrap server entity.

According to the present invention, it is furthermore advantageously possible and preferred that storing the pre-shared key identifier information and the pre-shared key secret information to the subscriber identity module element occurs upon manufacture of the subscriber identity module element, wherein especially the pre-shared key identifier information and the pre-shared key secret information corresponds to PKCS#15 data structures.

According to the present invention, it is advantageously possible and preferred that in a fourth step, subsequent to the third step, upon the initial authentication of the client communication device, the device identifier information is associated, within the bootstrap server entity, with the pre-shared key identifier information, and a subsequent authentication of the client communication device - especially to operatively communicate with the mobile communication network - requires the transmission of the device identifier information and the pre-shared key identifier information to the bootstrap server entity.

Thereby, it is advantageously possible to realize a more efficient authentication of the client communication device, once the initial authentication is or has been successfully performed.

Furthermore, it is advantageously possible and preferred according to the present invention that, during the third step, an initial or temporary communication link is used to preliminarily connect the client communication device to the bootstrap server entity.

Thereby, the inventive method is able to be applied in an efficient but still safe and secure manner.

Furthermore, it is advantageously possible and preferred according to the present invention that, in order to transmit the device identifier information as well as the pre-shared key identifier information and/or the pre-shared key secret information from the client communication device to the bootstrap server entity, the third step comprises the following sub-steps:
-- in a first sub-step, the bootstrap server entity, upon reception of the pre-shared key identifier information, identifies or searches for the pre-shared key identifier information, and - in case the pre-shared key identifier information is identified or found -,
-- in a second sub-step, the bootstrap server entity, upon reception of the pre-shared key secret information, verifies the pre-shared key secret information associated to the pre-shared key identifier information, wherein the client communication device and/or the subscriber identity module within the client communication device is initially authenticated by the bootstrap server entity in case that the pre-shared key secret information is also verified.

According to a further preferred embodiment of the present invention, the client communication device is a mobile device or a machine type communication device or an internet-of-things communication device or a machine-to-machine communication device, and wherein the especially the device identifier information is specific to the client communication device.

Furthermore, the present invention relates to a system for initial authentication, with respect to a bootstrap server entity of a telecommunications network, of a client communication device and/or of a subscriber identity module within the client communication device, wherein after the initial authentication, the client communication device is enabled or initialized to operationally communicate with the mobile communication network, wherein a device identifier information is assigned to the client communication device,
wherein the system is configured such that:
-- a pre-shared key identifier information is stored to a subscriber identity module element as well as transmitted to the bootstrap server entity,
-- the subscriber identity module element is associated with or built in or assigned to the client communication device as its subscriber identity module,
-- the client communication device with its subscriber identity module initially communicates with the bootstrap server entity and transmits the device identifier information and the pre-shared key identifier information to the bootstrap server entity, wherein the client communication device and/or the subscriber identity module within the client communication device is initially authenticated by the bootstrap server entity in case that the pre-shared key identifier information is verified by the bootstrap server entity.

Furthermore, the present invention relates to a client communication device for initial authentication, with respect to a bootstrap server entity of a telecommunications network, of the client communication device and/or of a subscriber identity module within the client communication device, wherein after the initial authentication, the client communication device is enabled or initialized to operationally communicate with the mobile communication network, wherein a device identifier information is assigned to the client communication device,
wherein the client communication device is configured such that:
-- a pre-shared key identifier information is stored to a subscriber identity module element as well as transmitted to the bootstrap server entity,
-- the subscriber identity module element is associated with or built in or assigned to the client communication device as its subscriber identity module,
-- the client communication device with its subscriber identity module initially communicates with the bootstrap server entity and transmits the device identifier information and the pre-shared key identifier information to the bootstrap server entity, wherein the client communication device and/or the subscriber identity module within the client communication device is initially authenticated by the bootstrap server entity in case that the pre-shared key identifier information is verified by the bootstrap server entity.

Still additionally, the present invention relates to a bootstrap server entity for initial authentication of a client communication device and/or of a subscriber identity module within the client communication device, wherein after the initial authentication, the client communication device is enabled or initialized to operationally communicate with the mobile communication network, wherein a device identifier information is assigned to the client communication device,
wherein the bootstrap server entity is configured such that:
-- a pre-shared key identifier information is stored to a subscriber identity module element as well as transmitted to the bootstrap server entity,
-- the subscriber identity module element is associated with or built in or assigned to the client communication device as its subscriber identity module,
-- the client communication device with its subscriber identity module initially communicates with the bootstrap server entity and transmits the device identifier information and the pre-shared key identifier information to the bootstrap server entity, wherein the client communication device and/or the subscriber identity module within the client communication device is initially authenticated by the bootstrap server entity in case that the pre-shared key identifier information is verified by the bootstrap server entity.

Additionally, the present invention relates to a program comprising a computer readable program code which, when executed on a computer and/or on a client communication device and/or on a bootstrap server entity and/or on a network node of a mobile communication network, or in part on a client communication device and/or in part on a bootstrap server entity and/or in part on a network node of a mobile communication network, causes the computer and/or the client communication device and/or the bootstrap server entity and/or the network node of the mobile communication network to perform the inventive method.

Still additionally, the present invention relates to a computer-readable medium comprising instructions which when executed on a computer and/or on a client communication device and/or on a bootstrap server entity and/or on a network node of a mobile communication network, or in part on a client communication device and/or in part on a bootstrap server entity and/or in part on a network node of a mobile communication network, causes the computer and/or the client communication device and/or the bootstrap server entity and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

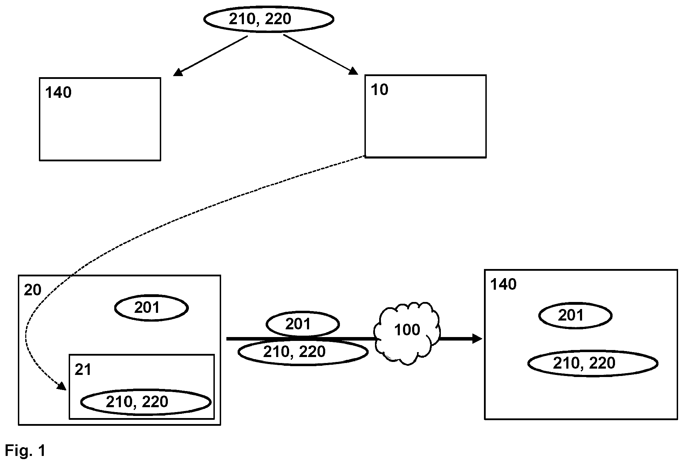

Figure 1 schematically illustrates both storing the pre-shared key information to or on a subscriber identity module element as well as transmitting the pre-shared key information (or data record) to a bootstrap server entity, and the client communication device (with the subscriber identity module) initially communicating with the bootstrap server entity.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, the storing of the pre-shared key information 210, 220 both to or on a subscriber identity module element 10 and the transmission of the pre-shared key information (or data record) 210, 220 to a bootstrap server entity 140 is schematically shown (cf. the upper part of Figure 1), as well as (cf. the bottom part of Figure 1) the client communication device 20 (with the subscriber identity module 21) initially communicating with the bootstrap server entity 140 - especially via (or using) the mobile communication network 100.

The client communication device 20 - typically a machine-to-machine communication device or a machine type communication device (also called internet-of-things device) - is connected to the access network (not specifically shown in Figure 1) of the mobile communication network 100. The client communication device 20 comprises a subscriber identity module 21, and is associated with or assigned to a device identifier information 201. The client communication device 20 (typically within its subscriber identity module 21) comprises the pre-shared key information (or data record) 210, 220, and the pre-shared key information or pre-shared key data record comprises at least a pre-shared key identifier information 210 and a pre-shared key secret information 220.

Prior to the client communication device 20 and the subscriber identity module 21 being associated or assembled, the client communication device 20 (at least without the specific subscriber identity module, but typically without any subscriber identity module) is manufactured, especially independently from the manufacture of the subscriber identity module element 10 (that is being mounted or built-in or inserted or assembled - as the subscriber identity module 21 - to the client communication device 20. According to the present invention, in a first step, at least the pre-shared key identifier information 210 (but preferably both the pre-shared key identifier information 210 and the pre-shared key secret information 220) are stored to the subscriber identity module element 10, and are transferred (or transmitted) to the bootstrap server entity 140, cf. the upper part of Figure 1. In a second step, subsequent to the first step, the subscriber identity module element 10 is associated with or built in or assigned to the client communication device 20 as its subscriber identity module 21; this is schematically represented in Figure 1 by means of a dashed arrow from the upper part of Figure 1 to the bottom part, illustrating the assembly of the subscriber identity module element 10 (comprising the pre-shared key identifier information 210 and/or the pre-shared key secret information 220) and the client communication device 20; thereby the subscriber identity module element 10 becomes the subscriber identity module 21 of the client communication device 20.

In a third step, subsequent to the second step, the client communication device 20 (with its subscriber identity module 21) initially communicates with the bootstrap server entity 140. During this communication, the client communication device 20 and the subscriber identity module 21 transmits the device identifier information 201 and the pre-shared key identifier information 210 to the bootstrap server entity 140.

The client communication device 20 and/or its subscriber identity module 21 within the client communication device 20 is/are initially authenticated by the bootstrap server entity 140 in case that at least the pre-shared key identifier information 210 (but preferably both the pre-shared key identifier information 210 and the pre-shared key secret information 220) is verified by the bootstrap server entity 140, i.e. in case that these pieces of information (i.e. regarding the pre-shared key identifier information 210 and/or the pre-shared key secret information 220) correspond to the pre-shared key information stored to or transmitted to the bootstrap server entity 140 during the first step. In this case, the client communication device 20 (and/or its subscriber identity module 21) is authenticated by the bootstrap server entity 140, and the device identifier information 201 is associated - within the bootstrap server entity 140 - to the pre-shared key information, i.e. the pre-shared key identifier information 210 and the pre-shared key secret information 220.

According to the present invention, it is preferred that the pre-shared key identifier information 210 and/or the pre-shared key secret information 220 corresponds to or is/are derived from one or a plurality of (or comprises at least part of or is derived from a part of) subscriber-identity-module-specific pieces of information of the subscriber identity module element 10. These subscriber-identity-module-specific pieces of information of the subscriber identity module element 10 especially comprise: the first and/or second personal identification number, PIN1, PIN2, of the subscriber identity module element 10, the first and/or second personal unblocking key, PUK1, PUK2, of the subscriber identity module element 10, and/or the international mobile subscriber information, IMSI, and/or the mobile station international subscriber directory number, MSISDN, and/or the integrated circuit card identifier, ICCID, of the subscriber identity module element 10.

Typically, the manufacturer of the subscriber identity module (or subscriber identity module element 10) takes over the task of storing standardized pre-shared key data records on the subscriber identity module (or subscriber identity module element 10). According to the present invention, this is preferably done in the form of PKCS#15 data structures. Especially, the data is forced to be freely readable on the card.

For an efficient process of depositing (or storing) pre-shared key data records on the SIM, data is used which is already known in the standard process on both sides (i.e. on the side of the subscriber identity module manufacturer and on the side of the bootstrap server entity 140 and/or mobile communication network 100). In the exchange between a subscriber identity module manufacturer and a telecommunications provider as the provider of the bootstrap server, subscriber-identity-module-specific information is particularly useful in addition to the identifiers of the subscriber identity module (element) 10. Such different types of information especially include, PIN data (first and second PIN, PIN1, PIN2), PUK data (first and second PUK, PUK1, PUK2) as well as the IMSI, the MSISDN, and/or the ICCID, which are all numerical types (numerical data, i.e. comprising representing digits, not letters or other characters). To use PIN and PUK offer the advantage of real random numbers without predetermined sections and are considered secret among the subscriber identity module manufacturer, the telecommunication providers (i.e. the bootstrap server entity 140 and/or the mobile communication network 100) and the users of the client communication device 20 (i.e. the subscriber identity module users).

According to the present invention, between the manufacturer of the subscriber identity module (element) 10 and telecommunications provider (or mobile communication network 100 or bootstrap server entity 140), it is especially agreed upon a selection of these mentioned data as pre-shared key identifier information 210 (hereinafter also called PSK-ID) and another selection of these mentioned data as pre-shared key secret information 220 (hereinafter also called PSK-secret). In addition, a uniform procedure for the encryption of these data is agreed upon.

According to the present invention, the manufacturer of the subscriber identity module (element) 10 writes (or stores) the pre-shared key data record generated (according to the procedure agreed upon), i.e. the pre-shared key identifier information 210 and the pre-shared key secret information 220 to the subscriber identity module (element) 10. Hence, in the situation of the subscriber identity module element 10 being inserted or built-in or assembled or associated with the client communication device 20 (i.e. when the subscriber identity module element 10 becomes the (specific) subscriber identity module 21 of the (specific) client communication device 20), the pre-shared key data record generated (according to the procedure agreed upon), i.e. the pre-shared key identifier information 210 and the pre-shared key secret information 220, are stored on the subscriber identity module 21 (within the client communication device 20), and are able to be used for an initial authentication (of the client communication device 20) towards the bootstrap server entity 140 and/or for the establishment of a secure communication channel between the client communication device 20.

Upon manufacture of the subscriber identity module 21 (i.e. the corresponding subscriber identity module element 10), an entry is created, in the bootstrap server entity 140. This entry is named with (or associated with or assigned to) a unique identifier of the subscriber identity module 21, e.g. the IMSI, the ICCID, the MSISDN or a comparable identifier. Also the telecommunications provider (i.e. the mobile communication network 100) has all the subscriber identity module data as previously mentioned (especially the PIN1, PIN2, PUK1, PUK2, IMSI, ICCID, MSISDN, etc.) for the subscriber identity module 21 supplied. In the bootstrap server entity 140, the PSK-ID and the PSK-secret, i.e. the pre-shared key identifier information 210 and the pre-shared key secret information 220, are either generated according to the same procedure agreed upon above and linked to the entry for this subscriber identity module 21, or these pieces of information are transmitted, by the manufacturer of the subscriber identity module 21, to the bootstrap server entity 140.

During the first booting operation of the client communication device 20, the client communication device reads the PSK data record (i.e. the PSK-ID 210 and/or the PSK-secret 220) from the subscriber identity module 21 and reports to the bootstrap server entity 140 with its unique device identifier information 201. For authentication, the client communication device 20 transfers (or transmits) the PSK data record (i.e. the PSK-ID 210 and/or the PSK-secret 220) in the encrypted form stored on the subscriber identity module 21.
The bootstrap server entity 140 searches its database for the entry whose PSK ID 210 matches the PSK ID 210 specified by the client communication device 20. If no such entry is found, authentication is considered to have failed because no such subscriber identity module 21 has been provisioned. If such an entry is found, the bootstrap server entity 140 checks the PSK secret passed by the device for matching with the PSK secret stored for this SIM entry. If this is a match, the client communication device 20 is considered authenticated.
This correspond to a first and second sub-step: The bootstrap server entity 140, upon reception of the pre-shared key identifier information 210, identifies or searches for the pre-shared key identifier information 210, and - in case the pre-shared key identifier information 210 is identified or found - the bootstrap server entity 140, upon reception of the pre-shared key secret information 220, verifies the pre-shared key secret information 220 associated to the pre-shared key identifier information 210, wherein the client communication device 20 and/or the subscriber identity module 21 within the client communication device 20 is initially authenticated by the bootstrap server entity 140 in case that the pre-shared key secret information 220 is also verified.

If this initial authentication of the client communication device 20 (with its subscriber identity module 21) is successful, the entry (within the bootstrap server entity 140) is renamed in the bootstrap server entity 140 with the device identifier information 210 of the used client communication device 20. The PSK record (i.e. the PSK-ID 210 and the PSK-secret 220) is still used in its encrypted form as PSK ID 210 and PSK Secret 220. A further access (after the initial authentication performed during the initial bootstrap operation) is considered authenticated if the combination of device identifier information 201, PSK-ID 210 and PSK-secret 220 matches the data stored in the bootstrap server entity 140.

According to the present invention, it is advantageously possible to provide a comparatively secure implementation, and - in the process of depositing the PSK data record in the subscriber identity module 21 - only information already available to the manufacturer of the subscriber identity module 21 is used. However, the data records used differ between different subscriber identity modules and are (or can be) considered secret. The process of writing these data to the subscriber identity module 21 (or subscriber identity module element 10) in encrypted form is able to be performed in a completely automated manner by software.

Hence, according to the present invention, it is provided a system to provide a bootstrap server entity 140 as a first communication endpoint, and a separate pre-shared key record (different for each subscriber identity module or subscriber identity module element 10) is used for (initial) authentication of a single bootstrap client (client communication device 20) as a second communication endpoint. The subscriber identity module (or smartcard) 21 is used as a means of transport to exchange the pre-shared key data records with the second communication endpoint, and the subscriber identity module 21 of a telecommunications provider (or mobile communication network 100) is used as the means of transport of the pre-shared key data records. According to the present invention, the pre-shared key data record is preferably generated completely and exclusively from subscriber identity module identification or other subscriber-identity-module-specific information, being provided to the telecommunication provider (or the mobile communication network 100 or the bootstrap server entity 140) by the manufacturer of the subscriber identity module 21 (or of the subscriber identity module element 10). Especially according to the present invention, the identifier of the subscriber identity module 21 is used in whole or in part to identify the PSK data record, and the especially the designation of the pre-shared key data record is replaced with a device-specific designation (i.e. the device identifier information 201) on the first call (or after the initial bootstrap operation).

It is especially preferred according to a first exemplary embodiment of the present invention that, e.g., the first personal unblocking key PUK1 is used as the pre-shared key identifier information 210, the second personal unblocking key PUK2 is used as the pre-shared key secret information 220, and especially the pre-shared key secret information 220 (or both the pre-shared key secret information 220 and the pre-shared key identifier information 210) being encrypted using a secret information ("K"), this secret information K being a shared secret among the manufacturer of the subscriber identity module 21, and the bootstrap server entity 140 / the mobile communication network 100. Such a secret key K is agreed between the manufacturer of the subscriber identity module 21 and the mobile communication network 100 (or telecommunications provider), and the PSK data record consists of the PUK1 information, encrypted with the secret key K as PSK-ID 210, and the PUK2 information, encrypted with K as PSK-secret 220. The manufacturer of the subscriber identity module 21 writes these data to the subscriber identity module 21, i.e. this encrypted data record. Since the telecommunications provider knows the secret key K and receives (in the first step), from the manufacturer of the subscriber identity module 21, the PUK1 and PUK2 information for the specific considered subscriber identity module 21 (or the specific considered subscriber identity module element 10), and uses (or is able to use) the same encryption algorithm as the subscriber identity module manufacturer, the same data are stored in the bootstrap server entity 140 as PSK data record 210, 220 as on the subscriber identity module 21. For this purpose, only a secret key K or a procedure for deriving further keys Ks needs to be agreed upon once between the subscriber identity module manufacturer and the mobile communication network 100 (or the bootstrap server entity 140). Since K or Ks are secret, the pre-shared key data records cannot (or are very difficult to) be generated or guessed (without this knowledge).

According to a second exemplary embodiment of the present invention, it is preferred that, e.g., the first personal unblocking key PUK1 and the second personal unblocking key PUK2 are used as keys for the PSK-ID 210 and PSK-secret 220: As the PSK-ID 210, an identifier of the subscriber identity module 21, e.g. the IMSI, is used, and it is encrypted using the PUK1 information. As PSK-secret 220, another identifier is used, e.g. the ICCID, and it is encrypted using the PUK2 information. Thereby, it is advantageously possible that no transmission (and the dependence on the transmission) of the secret key K is required; all necessary pieces of information are already available on both sides by default. Since the PUK1 information and the PUK2 information are considered secret, the PSK records (the PSK-ID 210 and PSK-secret 220) cannot (or are very difficult to) be generated or guessed.

## Claims

1. Method for initial authentication, with respect to a bootstrap server entity (140) of a mobile communication network (100), of a client communication device (20) and/or of a subscriber identity module (21) within the client communication device (20), wherein after the initial authentication, the client communication device (20) is enabled or initialized to operationally communicate with the mobile communication network (100), wherein a device identifier information (201) is assigned to the client communication device (20),
wherein the method comprises the following steps:
-- in a first step, a pre-shared key identifier information (210) is stored to a subscriber identity module element (10) as well as transmitted to the bootstrap server entity (140),
-- in a second step, subsequent to the first step, the subscriber identity module element (10) is associated with or built in or assigned to the client communication device (20) as its subscriber identity module (21),
-- in a third step, subsequent to the second step, the client communication device (20) with its subscriber identity module (21) initially communicates with the bootstrap server entity (140) and transmits the device identifier information (201) and the pre-shared key identifier information (210) to the bootstrap server entity (140), wherein the client communication device (20) and/or the subscriber identity module (21) within the client communication device (20) is initially authenticated by the bootstrap server entity (140) in case that the pre-shared key identifier information (210) is verified by the bootstrap server entity (140),
wherein the pre-shared key identifier information (210) corresponds to or is derived from one or a plurality of, or comprises at least part of, subscriber-identity-module-specific pieces of information of the subscriber identity module element (10), wherein the subscriber-identity-module-specific pieces of information of the subscriber identity module element (10) comprise the following pieces of information:
-- the first personal identification number, PIN1, of the subscriber identity module element (10),
-- the second personal identification number, PIN2, of the subscriber identity module element (10),
-- the first personal unblocking key, PUK1, of the subscriber identity module element (10),
-- the second personal unblocking key, PUK2, of the subscriber identity module element (10),
-- the international mobile subscriber information, IMSI, of the subscriber identity module element (10),
-- the integrated circuit card identifier, ICCID, of the subscriber identity module element (10),
-- the mobile station international subscriber directory number, MSISDN, of the subscriber identity module element (10).

2. Method according to claim 1, wherein in the first step a pre-shared key secret information (220) - besides the pre-shared key identifier information (210) - is stored to the subscriber identity module element (10) as well as transmitted to the bootstrap server entity (140),
wherein the pre-shared key secret information (220) is used to establish a secure communication channel between the client communication device (20) and the bootstrap server entity (140), especially during the third step to initially transmit the device identifier information (201), and the pre-shared key identifier information (210) to the bootstrap server entity (140).

3. Method according to claim 2, wherein the pre-shared key secret information (220) corresponds to or is derived from one or a plurality of, or comprises at least part of, subscriber-identity-module-specific pieces of information of the subscriber identity module element (10), wherein the subscriber-identity-module-specific pieces of information of the subscriber identity module element (10) especially comprise the following pieces of information:
-- the first personal identification number, PIN1, of the subscriber identity module element (10),
-- the second personal identification number, PIN2, of the subscriber identity module element (10),
-- the first personal unblocking key, PUK1, of the subscriber identity module element (10),
-- the second personal unblocking key, PUK2, of the subscriber identity module element (10),
-- the international mobile subscriber information, IMSI, of the subscriber identity module element (10),
-- the integrated circuit card identifier, ICCID, of the subscriber identity module element (10),
-- the mobile station international subscriber directory number, MSISDN, of the subscriber identity module element (10).

4. Method according to one of claims 2 or 3, wherein at least the pre-shared key secret information (220) corresponds to or is derived from subscriber-identity-module-specific pieces of information of the subscriber identity module element (10) in encrypted form, wherein especially the encryption of the subscriber-identity-module-specific pieces of information is performed using a secret key information known to both the manufacturer of the subscriber identity module element (10) and at least one of the bootstrap server entity (140) and the mobile communication network (100).

5. Method according to one of the preceding claims, wherein storing the pre-shared key identifier information (210) and the pre-shared key secret information (220) to the subscriber identity module element (10) occurs upon manufacture of the subscriber identity module element (10),
wherein especially the pre-shared key identifier information (210) and the pre-shared key secret information (220) corresponds to PKCS#15 data structures.

6. Method according to one of the preceding claims, wherein in a fourth step, subsequent to the third step, upon the initial authentication of the client communication device (20), the device identifier information (201) is associated, within the bootstrap server entity (140), with the pre-shared key identifier information (210), and a subsequent authentication of the client communication device (20) - especially to operatively communicate with the mobile communication network (100) - requires the transmission of the device identifier information (201) and the pre-shared key identifier information (210) to the bootstrap server entity (140).

7. Method according to one of the preceding claims, wherein, during the third step, an initial or temporary communication link is used to preliminarily connect the client communication device (20) to the bootstrap server entity (140).

8. Method according to one of the preceding claims, wherein, in order to transmit the device identifier information (201) as well as the pre-shared key identifier information (210) and/or the pre-shared key secret information (220) from the client communication device (20) to the bootstrap server entity (140), the third step comprises the following sub-steps:
-- in a first sub-step, the bootstrap server entity (140), upon reception of the pre-shared key identifier information (210), identifies or searches for the pre-shared key identifier information (210), and - in case the pre-shared key identifier information (210) is identified or found -,
-- in a second sub-step, the bootstrap server entity (140), upon reception of the pre-shared key secret information (220), verifies the pre-shared key secret information (220) associated to the pre-shared key identifier information (210), wherein the client communication device (20) and/or the subscriber identity module (21) within the client communication device (20) is initially authenticated by the bootstrap server entity (140) in case that the pre-shared key secret information (220) is also verified.

9. Method according to one of the preceding claims, wherein the client communication device (20) is a mobile device or a machine type communication device or an internet-of-things communication device or a machine-to-machine communication device, and wherein the especially the device identifier information (201) is specific to the client communication device (20).

10. System for initial authentication, with respect to a bootstrap server entity (140) of a mobile communication network (100), of a client communication device (20) and/or of a subscriber identity module (21) within the client communication device (20), wherein after the initial authentication, the client communication device (20) is enabled or initialized to operationally communicate with the mobile communication network (100), wherein a device identifier information (201) is assigned to the client communication device (20),
wherein the system is configured such that:
-- a pre-shared key identifier information (210) is stored to a subscriber identity module element (10) as well as transmitted to the bootstrap server entity (140),
-- the subscriber identity module element (10) is associated with or built in or assigned to the client communication device (20) as its subscriber identity module (21),
-- the client communication device (20) with its subscriber identity module (21) initially communicates with the bootstrap server entity (140) and transmits the device identifier information (201) and the pre-shared key identifier information (210) to the bootstrap server entity (140), wherein the client communication device (20) and/or the subscriber identity module (21) within the client communication device (20) is initially authenticated by the bootstrap server entity (140) in case that the pre-shared key identifier information (210) is verified by the bootstrap server entity (140),
wherein the pre-shared key identifier information (210) corresponds to or is derived from one or a plurality of, or comprises at least part of, subscriber-identity-module-specific pieces of information of the subscriber identity module element (10), wherein the subscriber-identity-module-specific pieces of information of the subscriber identity module element (10) comprise the following pieces of information:
-- the first personal identification number, PIN1, of the subscriber identity module element (10),
-- the second personal identification number, PIN2, of the subscriber identity module element (10),
-- the first personal unblocking key, PUK1, of the subscriber identity module element (10),
-- the second personal unblocking key, PUK2, of the subscriber identity module element (10),
-- the international mobile subscriber information, IMSI, of the subscriber identity module element (10),
-- the integrated circuit card identifier, ICCID, of the subscriber identity module element (10),
-- the mobile station international subscriber directory number, MSISDN, of the subscriber identity module element (10).

11. Client communication device (20) for initial authentication, with respect to a bootstrap server entity (140) of a mobile communication network (100), of the client communication device (20) and/or of a subscriber identity module (21) within the client communication device (20), wherein after the initial authentication, the client communication device (20) is enabled or initialized to operationally communicate with the mobile communication network (100), wherein a device identifier information (201) is assigned to the client communication device (20),
wherein the client communication device (20) is configured such that:
-- a pre-shared key identifier information (210) is stored to a subscriber identity module element (10) as well as transmitted to the bootstrap server entity (140),
-- the subscriber identity module element (10) is associated with or built in or assigned to the client communication device (20) as its subscriber identity module (21),
-- the client communication device (20) with its subscriber identity module (21) initially communicates with the bootstrap server entity (140) and transmits the device identifier information (201) and the pre-shared key identifier information (210) to the bootstrap server entity (140), wherein the client communication device (20) and/or the subscriber identity module (21) within the client communication device (20) is initially authenticated by the bootstrap server entity (140) in case that the pre-shared key identifier information (210) is verified by the bootstrap server entity (140),
wherein the pre-shared key identifier information (210) corresponds to or is derived from one or a plurality of, or comprises at least part of, subscriber-identity-module-specific pieces of information of the subscriber identity module element (10), wherein the subscriber-identity-module-specific pieces of information of the subscriber identity module element (10) comprise the following pieces of information:
-- the first personal identification number, PIN1, of the subscriber identity module element (10),
-- the second personal identification number, PIN2, of the subscriber identity module element (10),
-- the first personal unblocking key, PUK1, of the subscriber identity module element (10),
-- the second personal unblocking key, PUK2, of the subscriber identity module element (10),
-- the international mobile subscriber information, IMSI, of the subscriber identity module element (10),
-- the integrated circuit card identifier, ICCID, of the subscriber identity module element (10),
-- the mobile station international subscriber directory number, MSISDN, of the subscriber identity module element (10).

12. Bootstrap server entity (140) for initial authentication of a client communication device (20) and/or of a subscriber identity module (21) within the client communication device (20), wherein after the initial authentication, the client communication device (20) is enabled or initialized to operationally communicate with the mobile communication network (100), wherein a device identifier information (201) is assigned to the client communication device (20), wherein the bootstrap server entity (140) is configured such that:
-- a pre-shared key identifier information (210) is stored to a subscriber identity module element (10) as well as transmitted to the bootstrap server entity (140),
-- the subscriber identity module element (10) is associated with or built in or assigned to the client communication device (20) as its subscriber identity module (21),
-- the client communication device (20) with its subscriber identity module (21) initially communicates with the bootstrap server entity (140) and transmits the device identifier information (201) and the pre-shared key identifier information (210) to the bootstrap server entity (140), wherein the client communication device (20) and/or the subscriber identity module (21) within the client communication device (20) is initially authenticated by the bootstrap server entity (140) in case that the pre-shared key identifier information (210) is verified by the bootstrap server entity (140),
wherein the pre-shared key identifier information (210) corresponds to or is derived from one or a plurality of, or comprises at least part of, subscriber-identity-module-specific pieces of information of the subscriber identity module element (10), wherein the subscriber-identity-module-specific pieces of information of the subscriber identity module element (10) comprise the following pieces of information:
-- the first personal identification number, PIN1, of the subscriber identity module element (10),
-- the second personal identification number, PIN2, of the subscriber identity module element (10),
-- the first personal unblocking key, PUK1, of the subscriber identity module element (10),
-- the second personal unblocking key, PUK2, of the subscriber identity module element (10),
-- the international mobile subscriber information, IMSI, of the subscriber identity module element (10),
-- the integrated circuit card identifier, ICCID, of the subscriber identity module element (10),
-- the mobile station international subscriber directory number, MSISDN, of the subscriber identity module element (10).

13. Program comprising a computer readable program code, which, when executed on a computer and/or on a client communication device (20) and/or on a bootstrap server entity (140) and/or on a network node of a mobile communication network (100), or in part on a client communication device (20) and/or in part on a bootstrap server entity (140) and/or in part on a network node of a mobile communication network (100), causes the computer and/or the client communication device (20) and/or the bootstrap server entity (140) and/or the network node of the mobile communication network (100) to perform a method according one of claims 1 to 9.

14. Computer-readable medium comprising instructions which when executed on a computer and/or on a client communication device (20) and/or on a bootstrap server entity (140) and/or on a network node of a mobile communication network (100), or in part on a client communication device (20) and/or in part on a bootstrap server entity (140) and/or in part on a network node of a mobile communication network (100), causes the computer and/or the client communication device (20) and/or the bootstrap server entity (140) and/or the network node of the mobile communication network (100) to perform a method according one of claims 1 to 9.

## Patentansprüche

1. Verfahren zur anfänglichen Authentifizierung, in Bezug auf eine Bootstrap-Server-Entität (140) eines Mobilkommunikationsnetzes (100), einer Client-Kommunikationsvorrichtung (20) und/oder eines Teilnehmeridentitätsmoduls (21) innerhalb der Client-Kommunikationsvorrichtung (20), wobei nach der anfänglichen Authentifizierung die Client-Kommunikationsvorrichtung (20) für die operative Kommunikation mit dem Mobilkommunikationsnetz (100) aktiviert oder initialisiert wird, wobei der Client-Kommunikationsvorrichtung (20) eine Vorrichtungskennungsinformation (201) zugewiesen wird, wobei das Verfahren die folgenden Schritte umfasst:
- in einem ersten Schritt wird eine Pre-Shared-Key-Identifier-Information (210) in einem Teilnehmeridentitätsmodulelement (10) gespeichert sowie an die Bootstrap-Server-Entität (140) gesendet,
- in einem zweiten Schritt, im Anschluss an den ersten Schritt, wird das Teilnehmeridentitätsmodulelement (10) mit der Client-Kommunikationsvorrichtung (20) als ihr Teilnehmeridentitätsmodul (21) verknüpft oder wird in die Client-Kommunikationsvorrichtung (20) als ihr Teilnehmeridentitätsmodul (21) eingebaut oder wird der Client-Kommunikationsvorrichtung (20) als ihr Teilnehmeridentitätsmodul (21) zugewiesen,
- in einem dritten Schritt, im Anschluss an den zweiten Schritt, kommuniziert die Client-Kommunikationsvorrichtung (20) mit ihrem Teilnehmeridentitätsmodul (21) anfänglich mit der Bootstrap-Server-Entität (140) und sendet die Vorrichtungskennungsinformation (201) und die Pre-Shared-Key-Identifier-Information (210) an die Bootstrap-Server-Entität (140), wobei die Client-Kommunikationsvorrichtung (20) und/oder das Teilnehmeridentitätsmodul (21) innerhalb der Client-Kommunikationsvorrichtung (20) anfänglich durch die Bootstrap-Server-Entität (140) authentifiziert wird, falls die Pre-Shared-Key-Identifier-Information (210) durch die Bootstrap-Server-Entität (140) verifiziert wird,
wobei die Pre-Shared-Key-Identifier-Information (210) einer oder mehreren teilnehmeridentitätsmodulspezifischen Informationen des Teilnehmeridentitätsmodulelements (10) entspricht oder von einer oder mehreren teilnehmeridentitätsmodulspezifischen Informationen des Teilnehmeridentitätsmodulelements (10) abgeleitet ist oder mindestens einen Teil von teilnehmeridentitätsmodulspezifischen Informationen des Teilnehmeridentitätsmodulelements (10) umfasst, wobei die teilnehmeridentitätsmodulspezifischen Informationen des Teilnehmeridentitätsmodulelements (10) die folgenden Informationen umfassen:
- die erste persönliche Identifikationsnummer (PIN1) des Teilnehmeridentitätsmodulelements (10),
- die zweite persönliche Identifikationsnummer (PIN2) des Teilnehmeridentitätsmodulelements (10),
- den ersten persönlichen Entsperrungsschlüssel (PUK1) des Teilnehmeridentitätsmodulelements (10),
- den zweiten persönlichen Entsperrungsschlüssel (PUK2) des Teilnehmeridentitätsmodulelements (10),
- die internationale Mobilfunkteilnehmerinformation (International Mobile Subscriber Information, IMSI) des Teilnehmeridentitätsmodulelements (10),
- die IC-Kartenkennung (Integrated Circuit Card Identifier, ICCID) des Teilnehmeridentitätsmodulelements (10),
- die internationale Teilnehmerverzeichnisnummer der Mobilstation (Mobile Station International Subscriber Directory Number, MSISDN) des Teilnehmeridentitätsmodulelements (10).

2. Verfahren nach Anspruch 1, wobei in dem ersten Schritt eine Pre-Shared-Key-Secret-Information (220) - neben der Pre-Shared-Key-Identifier-Information (210) - in dem Teilnehmeridentitätsmodulelement (10) gespeichert sowie an die Bootstrap-Server-Entität (140) gesendet wird,
wobei die Pre-Shared-Key-Secret-Information (220) verwendet wird, um einen sicheren Kommunikationskanal zwischen der Client-Kommunikationsvorrichtung (20) und der Bootstrap-Server-Entität (140) aufzubauen, insbesondere während des dritten Schrittes, um anfänglich die Vorrichtungskennungsinformation (201) und die Pre-Shared-Key-Identifier-Information (210) an die Bootstrap-Server-Entität (140) zu senden.

3. Verfahren nach Anspruch 2, wobei die Pre-Shared-Key-Identifier-Information (220) einer oder mehreren teilnehmeridentitätsmodulspezifischen Informationen des Teilnehmeridentitätsmodulelements (10) entspricht oder von einer oder mehreren teilnehmeridentitätsmodulspezifischen Informationen des Teilnehmeridentitätsmodulelements (10) abgeleitet ist oder mindestens einen Teil von teilnehmeridentitätsmodulspezifischen Informationen des Teilnehmeridentitätsmodulelements (10) umfasst, wobei die teilnehmeridentitätsmodulspezifischen Informationen des Teilnehmeridentitätsmodulelements (10) insbesondere die folgenden Informationen umfassen:
- die erste persönliche Identifikationsnummer (PIN1) des Teilnehmeridentitätsmodulelements (10),
- die zweite persönliche Identifikationsnummer (PIN2) des Teilnehmeridentitätsmodulelements (10),
- den ersten persönlichen Entsperrungsschlüssel (PUK1) des Teilnehmeridentitätsmodulelements (10),
- den zweiten persönlichen Entsperrungsschlüssel (PUK2) des Teilnehmeridentitätsmodulelements (10),
- die internationale Mobilfunkteilnehmerinformation (International Mobile Subscriber Information, IMSI) des Teilnehmeridentitätsmodulelements (10),
- die IC-Kartenkennung (Integrated Circuit Card Identifier, ICCID) des Teilnehmeridentitätsmodulelements (10),
- die internationale Teilnehmerverzeichnisnummer der Mobilstation (Mobile Station International Subscriber Directory Number, MSISDN) des Teilnehmeridentitätsmodulelements (10).

4. Verfahren nach einem der Ansprüche 2 und 3, wobei mindestens die Pre-Shared-Key-Secret-Information (220) teilnehmeridentitätsmodulspezifischen Informationen des Teilnehmeridentitätsmodulelements (10) in verschlüsselter Form entspricht oder von teilnehmeridentitätsmodulspezifischen Informationen des Teilnehmeridentitätsmodulelements (10) in verschlüsselter Form abgeleitet ist, wobei insbesondere die Verschlüsselung der teilnehmeridentitätsmodulspezifischen Informationen unter Verwendung einer Geheimschlüsselinformation durchgeführt wird, die sowohl dem Hersteller des Teilnehmeridentitätsmodulelements (10) als auch mindestens einer der Bootstrap-Server-Entität (140) und dem Mobilkommunikationsnetz (100) bekannt ist.

5. Verfahren nach einem der vorangehenden Ansprüche, wobei das Speichern der Pre-Shared-Key-Identifier-Information (210) und der Pre-Shared-Key-Secret-Information (220) in dem Teilnehmeridentitätsmodulelement (10) bei der Herstellung des Teilnehmeridentitätsmodulelements (10) erfolgt,
wobei insbesondere die Pre-Shared-Key-Identifier-Information (210) und die Pre-Shared-Key-Secret-Information (220) PKCS#15-Datenstrukturen entsprechen.

6. Verfahren nach einem der vorangehenden Ansprüche, wobei in einem vierten Schritt, im Anschluss an den dritten Schritt, bei der anfänglichen Authentifizierung der Client-Kommunikationsvorrichtung (20) die Vorrichtungskennungsinformation (201) innerhalb der Bootstrap-Server-Entität (140) mit der Pre-Shared-Key-Identifier-Information (210) verknüpft wird und eine anschließende Authentifizierung der Client-Kommunikationsvorrichtung (20) - insbesondere zur operativen Kommunikation mit dem Mobilkommunikationsnetz (100) - die Übertragung der Vorrichtungskennungsinformation (201) und der Pre-Shared-Key-Identifier-Information (210) an die Bootstrap-Server-Entität (140) erfordert.

7. Verfahren nach einem der vorangehenden Ansprüche, wobei während des dritten Schrittes eine anfängliche oder temporäre Kommunikationsverbindung verwendet wird, um die Client-Kommunikationsvorrichtung (20) vorläufig mit der Bootstrap-Server-Entität (140) zu verbinden.

8. Verfahren nach einem der vorangehenden Ansprüche, wobei, um die Vorrichtungskennungsinformation (201) sowie die Pre-Shared-Key-Identifier-Information (210) und/oder die Pre-Shared-Key-Secret-Information (220) von der Client-Kommunikationsvorrichtung (20) an die Bootstrap-Server-Entität(140) zu senden, der dritte Schritt die folgenden Teilschritte umfasst:
- in einem ersten Teilschritt identifiziert oder sucht die Bootstrap-Server-Entität(140) bei Empfang der Pre-Shared-Key-Identifier-Information (210) die Pre-Shared-Key-Identifier-Information (210), und - falls die Pre-Shared-Key-Identifier-Information (210) identifiziert oder gefunden wird -,
- verifiziert die Bootstrap-Server-Entität (140) in einem zweiten Teilschritt bei Empfang der Pre-Shared-Key-Secret-Information (220) die Pre-Shared-Key-Secret-Information (220), die mit der Pre-Shared-Key-Identifier-Information (210) verknüpft ist, wobei die Client-Kommunikationsvorrichtung (20) und/oder das Teilnehmeridentitätsmodul (21) innerhalb der Client-Kommunikationsvorrichtung (20) anfänglich durch die Bootstrap-Server-Entität (140) authentifiziert wird, falls die Pre-Shared-Key-Secret-Information (220) ebenfalls verifiziert wird.

9. Verfahren nach einem der vorangehenden Ansprüche, wobei die Client-Kommunikationsvorrichtung (20) eine Mobilvorrichtung oder eine Kommunikationsvorrichtung vom Maschinentyp oder eine Internet-of-Things-Kommunikationsvorrichtung oder eine Maschine-Maschine-Kommunikationsvorrichtung ist und wobei insbesondere die Vorrichtungskennungsinformation (201) für die Client-Kommunikationsvorrichtung (20) spezifisch ist.

10. System zur anfänglichen Authentifizierung, in Bezug auf eine Bootstrap-Server-Entität (140) eines Mobilkommunikationsnetzes (100), einer Client-Kommunikationsvorrichtung (20) und/oder eines Teilnehmeridentitätsmoduls (21) innerhalb der Client-Kommunikationsvorrichtung (20), wobei nach der anfänglichen Authentifizierung die Client-Kommunikationsvorrichtung (20) für die operative Kommunikation mit dem Mobilkommunikationsnetz (100) aktiviert oder initialisiert wird, wobei der Client-Kommunikationsvorrichtung (20) eine Vorrichtungskennungsinformation (201) zugewiesen wird, wobei das System so konfiguriert ist, dass:
- eine Pre-Shared-Key-Identifier-Information (210) in einem Teilnehmeridentitätsmodulelement (10) gespeichert sowie an die Bootstrap-Server-Entität (140) gesendet wird,
- das Teilnehmeridentitätsmodulelement (10) mit der Client-Kommunikationsvorrichtung (20) als ihr Teilnehmeridentitätsmodul (21) verknüpft wird oder in die Client-Kommunikationsvorrichtung (20) als ihr Teilnehmeridentitätsmodul (21) eingebaut wird oder der Client-Kommunikationsvorrichtung (20) als ihr Teilnehmeridentitätsmodul (21) zugewiesen wird,
- die Client-Kommunikationsvorrichtung (20) mit ihrem Teilnehmeridentitätsmodul (21) anfänglich mit der Bootstrap-Server-Entität (140) kommuniziert und die Vorrichtungskennungsinformation (201) und die Pre-Shared-Key-Identifier-Information (210) an die Bootstrap-Server-Entität (140) sendet, wobei die Client-Kommunikationsvorrichtung (20) und/oder das Teilnehmeridentitätsmodul (21) innerhalb der Client-Kommunikationsvorrichtung (20) anfänglich durch die Bootstrap-Server-Entität (140) authentifiziert wird, falls die Pre-Shared-Key-Identifier-Information (210) durch die Bootstrap-Server-Entität (140) verifiziert wird,
wobei die Pre-Shared-Key-Identifier-Information (210) einer oder mehreren teilnehmeridentitätsmodulspezifischen Informationen des Teilnehmeridentitätsmodulelements (10) entspricht oder von einer oder mehreren teilnehmeridentitätsmodulspezifischen Informationen des Teilnehmeridentitätsmodulelements (10) abgeleitet ist oder mindestens einen Teil von teilnehmeridentitätsmodulspezifischen Informationen des Teilnehmeridentitätsmodulelements (10) umfasst, wobei die teilnehmeridentitätsmodulspezifischen Informationen des Teilnehmeridentitätsmodulelements (10) die folgenden Informationen umfassen:
- die erste persönliche Identifikationsnummer (PIN1) des Teilnehmeridentitätsmodulelements (10),
- die zweite persönliche Identifikationsnummer (PIN2) des Teilnehmeridentitätsmodulelements (10),
- den ersten persönlichen Entsperrungsschlüssel (PUK1) des Teilnehmeridentitätsmodulelements (10),
- den zweiten persönlichen Entsperrungsschlüssel (PUK2) des Teilnehmeridentitätsmodulelements (10),
- die internationale Mobilfunkteilnehmerinformation (International Mobile Subscriber Information, IMSI) des Teilnehmeridentitätsmodulelements (10),
- die IC-Kartenkennung (Integrated Circuit Card Identifier, ICCID) des Teilnehmeridentitätsmodulelements (10),
- die internationale Teilnehmerverzeichnisnummer der Mobilstation (Mobile Station International Subscriber Directory Number, MSISDN) des Teilnehmeridentitätsmodulelements (10).

11. Client-Kommunikationsvorrichtung (20) zur anfänglichen Authentifizierung, in Bezug auf eine Bootstrap-Server-Entität (140) eines Mobilkommunikationsnetzes (100), der Client-Kommunikationsvorrichtung (20) und/oder eines Teilnehmeridentitätsmoduls (21) innerhalb der Client-Kommunikationsvorrichtung (20), wobei nach der anfänglichen Authentifizierung die Client-Kommunikationsvorrichtung (20) für die operative Kommunikation mit dem Mobilkommunikationsnetz (100) aktiviert oder initialisiert wird, wobei der Client-Kommunikationsvorrichtung (20) eine Vorrichtungskennungsinformation (201) zugewiesen wird, wobei die Client-Kommunikationsvorrichtung (20) so konfiguriert ist, dass:
- eine Pre-Shared-Key-Identifier-Information (210) in einem Teilnehmeridentitätsmodulelement (10) gespeichert sowie an die Bootstrap-Server-Entität (140) gesendet wird,
- das Teilnehmeridentitätsmodulelement (10) mit der Client-Kommunikationsvorrichtung (20) als ihr Teilnehmeridentitätsmodul (21) verknüpft wird oder in die Client-Kommunikationsvorrichtung (20) als ihr Teilnehmeridentitätsmodul (21) eingebaut wird oder der Client-Kommunikationsvorrichtung (20) als ihr Teilnehmeridentitätsmodul (21) zugewiesen wird,
- die Client-Kommunikationsvorrichtung (20) mit ihrem Teilnehmeridentitätsmodul (21) anfänglich mit der Bootstrap-Server-Entität (140) kommuniziert und die Vorrichtungskennungsinformation (201) und die Pre-Shared-Key-Identifier-Information (210) an die Bootstrap-Server-Entität (140) sendet, wobei die Client-Kommunikationsvorrichtung (20) und/oder das Teilnehmeridentitätsmodul (21) innerhalb der Client-Kommunikationsvorrichtung (20) anfänglich durch die Bootstrap-Server-Entität (140) authentifiziert wird, falls die Pre-Shared-Key-Identifier-Information (210) durch die Bootstrap-Server-Entität (140) verifiziert wird,
wobei die Pre-Shared-Key-Identifier-Information (210) einer oder mehreren teilnehmeridentitätsmodulspezifischen Informationen des Teilnehmeridentitätsmodulelements (10) entspricht oder von einer oder mehreren teilnehmeridentitätsmodulspezifischen Informationen des Teilnehmeridentitätsmodulelements (10) abgeleitet ist oder mindestens einen Teil von teilnehmeridentitätsmodulspezifischen Informationen des Teilnehmeridentitätsmodulelements (10) umfasst, wobei die teilnehmeridentitätsmodulspezifischen Informationen des Teilnehmeridentitätsmodulelements (10) die folgenden Informationen umfassen:
- die erste persönliche Identifikationsnummer (PIN1) des Teilnehmeridentitätsmodulelements (10),
- die zweite persönliche Identifikationsnummer (PIN2) des Teilnehmeridentitätsmodulelements (10),
- den ersten persönlichen Entsperrungsschlüssel (PUK1) des Teilnehmeridentitätsmodulelements (10),
- den zweiten persönlichen Entsperrungsschlüssel (PUK2) des Teilnehmeridentitätsmodulelements (10),
- die internationale Mobilfunkteilnehmerinformation (International Mobile Subscriber Information, IMSI) des Teilnehmeridentitätsmodulelements (10),
- die IC-Kartenkennung (Integrated Circuit Card Identifier, ICCID) des Teilnehmeridentitätsmodulelements (10),
- die internationale Teilnehmerverzeichnisnummer der Mobilstation (Mobile Station International Subscriber Directory Number, MSISDN) des Teilnehmeridentitätsmodulelements (10).

12. Bootstrap-Server-Entität (140) zur anfänglichen Authentifizierung einer Client-Kommunikationsvorrichtung (20) und/oder eines Teilnehmeridentitätsmoduls (21) innerhalb der Client-Kommunikationsvorrichtung (20), wobei nach der anfänglichen Authentifizierung die Client-Kommunikationsvorrichtung (20) für die operative Kommunikation mit dem Mobilkommunikationsnetz (100) aktiviert oder initialisiert wird, wobei der Client-Kommunikationsvorrichtung (20) eine Vorrichtungskennungsinformation (201) zugewiesen wird, wobei die Bootstrap-Server-Entität (140) so konfiguriert ist, dass:
- eine Pre-Shared-Key-Identifier-Information (210) in einem Teilnehmeridentitätsmodulelement (10) gespeichert sowie an die Bootstrap-Server-Entität (140) gesendet wird,
- das Teilnehmeridentitätsmodulelement (10) mit der Client-Kommunikationsvorrichtung (20) als ihr Teilnehmeridentitätsmodul (21) verknüpft wird oder in die Client-Kommunikationsvorrichtung (20) als ihr Teilnehmeridentitätsmodul (21) eingebaut wird oder der Client-Kommunikationsvorrichtung (20) als ihr Teilnehmeridentitätsmodul (21) zugewiesen wird,
- die Client-Kommunikationsvorrichtung (20) mit ihrem Teilnehmeridentitätsmodul (21) anfänglich mit der Bootstrap-Server-Entität (140) kommuniziert und die Vorrichtungskennungsinformation (201) und die Pre-Shared-Key-Identifier-Information (210) an die Bootstrap-Server-Entität (140) sendet, wobei die Client-Kommunikationsvorrichtung (20) und/oder das Teilnehmeridentitätsmodul (21) innerhalb der Client-Kommunikationsvorrichtung (20) anfänglich durch die Bootstrap-Server-Entität (140) authentifiziert wird, falls die Pre-Shared-Key-Identifier-Information (210) durch die Bootstrap-Server-Entität (140) verifiziert wird,
wobei die Pre-Shared-Key-Identifier-Information (210) einer oder mehreren teilnehmeridentitätsmodulspezifischen Informationen des Teilnehmeridentitätsmodulelements (10) entspricht oder von einer oder mehreren teilnehmeridentitätsmodulspezifischen Informationen des Teilnehmeridentitätsmodulelements (10) abgeleitet ist oder mindestens einen Teil von teilnehmeridentitätsmodulspezifischen Informationen des Teilnehmeridentitätsmodulelements (10) umfasst, wobei die teilnehmeridentitätsmodulspezifischen Informationen des Teilnehmeridentitätsmodulelements (10) die folgenden Informationen umfassen:
- die erste persönliche Identifikationsnummer (PIN1) des Teilnehmeridentitätsmodulelements (10),
- die zweite persönliche Identifikationsnummer (PIN2) des Teilnehmeridentitätsmodulelements (10),
- den ersten persönlichen Entsperrungsschlüssel (PUK1) des Teilnehmeridentitätsmodulelements (10),
- den zweiten persönlichen Entsperrungsschlüssel (PUK2) des Teilnehmeridentitätsmodulelements (10),
- die internationale Mobilfunkteilnehmerinformation (International Mobile Subscriber Information, IMSI) des Teilnehmeridentitätsmodulelements (10),
- die IC-Kartenkennung (Integrated Circuit Card Identifier, ICCID) des Teilnehmeridentitätsmodulelements (10),
- die internationale Teilnehmerverzeichnisnummer der Mobilstation (Mobile Station International Subscriber Directory Number, MSISDN) des Teilnehmeridentitätsmodulelements (10).

13. Programm, umfassend einen computerlesbaren Programmcode, der, wenn er auf einem Computer und/oder in einer Client-Kommunikationsvorrichtung (20) und/oder in einer Bootstrap-Server-Entität (140) und/oder in einem Netzknoten eines Mobilkommunikationsnetzes (100) oder teilweise in einer Client-Kommunikationsvorrichtung (20) und/oder teilweise in einer Bootstrap-Server-Entität (140) und/oder teilweise in einem Netzknoten eines Mobilkommunikationsnetzes (100) ausgeführt wird, den Computer und/oder die Client-Kommunikationsvorrichtung (20) und/oder die Bootstrap-Server-Entität (140) und/oder den Netzknoten des Mobilkommunikationsnetzes (100) veranlasst, ein Verfahren nach einem der Ansprüche 1 bis 9 durchzuführen.

14. Computerlesbares Medium, umfassend Instruktionen, die, wenn sie auf einem Computer und/oder in einer Client-Kommunikationsvorrichtung (20) und/oder in einer Bootstrap-Server-Entität (140) und/oder in einem Netzknoten eines Mobilkommunikationsnetzes (100) oder teilweise in einer Client-Kommunikationsvorrichtung (20) und/oder teilweise in einer Bootstrap-Server-Entität (140) und/oder teilweise in einem Netzknoten eines Mobilkommunikationsnetzes (100) ausgeführt werden, den Computer und/oder die Client-Kommunikationsvorrichtung (20) und/oder die Bootstrap-Server-Entität (140) und/oder den Netzknoten des Mobilkommunikationsnetzes (100) veranlassen, ein Verfahren nach einem der Ansprüche 1 bis 9 durchzuführen.

## Revendications

1. Procédé d'authentification initiale, par rapport à une entité serveur d'amorçage (140) d'un réseau de communication mobile (100), d'un dispositif de communication client (20) et/ou d'un module d'identité d'abonné (21) dans le dispositif de communication client (20), dans lequel après l'authentification initiale, le dispositif de communication client (20) est activé ou initialisé pour communiquer de manière opérationnelle avec le réseau de communication mobile (100), dans lequel une information d'identificateur de dispositif (201) est attribuée au dispositif de communication client (20), dans lequel le procédé comprend les étapes suivantes :
- dans une première étape, une information d'identificateur de clé prépartagée (210) est stockée dans un élément de module d'identité d'abonné (10) ainsi que transmise à l'entité serveur d'amorçage (140),
- dans une deuxième étape, consécutive à la première étape, l'élément de module d'identité d'abonné (10) est associé ou intégré ou attribué au dispositif de communication client (20) en tant que module d'identité d'abonné (21) de celui-ci,
- dans une troisième étape, consécutive à la deuxième étape, le dispositif de communication client (20) avec son module d'identité d'abonné (21) communique initialement avec l'entité serveur d'amorçage (140) et transmet l'information d'identificateur de dispositif (201) et l'information d'identificateur de clé prépartagée (210) à l'entité serveur d'amorçage (140), dans lequel le dispositif de communication client (20) et/ou le module d'identité d'abonné (21) dans le dispositif de communication client (20) sont initialement authentifiés par l'entité serveur d'amorçage (140) dans le cas où l'information d'identificateur de clé prépartagée (210) est vérifiée par l'entité serveur d'amorçage (140),
dans lequel l'information d'identificateur de clé prépartagée (210) correspond à ou est dérivée d'un ou d'une pluralité d'éléments d'information spécifiques au module d'identité d'abonné de l'élément de module d'identité d'abonné (10), ou comprend au moins une partie de ces éléments, dans lequel les éléments d'information spécifiques au module d'identité d'abonné de l'élément de module d'identité d'abonné (10) comprennent les éléments d'information suivants :
- le premier numéro d'identification personnel, PIN1, de l'élément de module d'identité d'abonné (10),
- le deuxième numéro d'identification personnel, PIN2, de l'élément de module d'identité d'abonné (10),
- la première clé de déblocage personnelle, PUK1, de l'élément de module d'identité d'abonné (10),
- la deuxième clé de déblocage personnelle, PUK2, de l'élément de module d'identité d'abonné (10),
- les informations internationales d'abonné mobile (International Mobile Subscriber Information, IMSI) de l'élément de module d'identité d'abonné (10),
- l'identificateur de carte à circuit intégré (Integrated Circuit Card Identifier, ICCID) de l'élément de module d'identité d'abonné (10),
- le numéro d'annuaire international d'abonné de station mobile (Mobile Station International Subscriber Directory Number, MSISDN) de l'élément de module d'identité d'abonné (10).

2. Procédé selon la revendication 1, dans lequel, dans la première étape, une information secrète de clé prépartagée (220) - en plus de l'information d'identificateur de clé prépartagée (210) - est stockée dans l'élément de module d'identité d'abonné (10) ainsi que transmise à l'entité serveur d'amorçage (140),
dans lequel l'information secrète de clé prépartagée (220) est utilisée pour établir un canal de communication sécurisé entre le dispositif de communication client (20) et l'entité serveur d'amorçage (140), en particulier pendant la troisième étape pour transmettre initialement l'information d'identificateur de dispositif (201), et l'information d'identificateur de clé prépartagée (210) à l'entité serveur d'amorçage (140).

3. Procédé selon la revendication 2, dans lequel l'information secrète de clé prépartagée (220) correspond à ou est dérivée d'un ou d'une pluralité d'éléments d'information spécifiques au module d'identité d'abonné de l'élément de module d'identité d'abonné (10), ou comprend au moins une partie de ces éléments, dans lequel les éléments d'information spécifiques au module d'identité d'abonné de l'élément de module d'identité d'abonné (10) comprennent en particulier les informations suivantes :
- le premier numéro d'identification personnel, PIN1, de l'élément de module d'identité d'abonné (10),
- le deuxième numéro d'identification personnel, PIN2, de l'élément de module d'identité d'abonné (10),
- la première clé de déblocage personnelle, PUK1, de l'élément de module d'identité d'abonné (10),
- la deuxième clé de déblocage personnelle, PUK2, de l'élément de module d'identité d'abonné (10),
- les informations internationales d'abonné mobile (International Mobile Subscriber Information, IMSI) de l'élément de module d'identité d'abonné (10),
- l'identificateur de carte à circuit intégré (Integrated Circuit Card Identifier, ICCID) de l'élément de module d'identité d'abonné (10),
- le numéro d'annuaire international d'abonné de station mobile (Mobile Station International Subscriber Directory Number, MSISDN) de l'élément de module d'identité d'abonné (10).

4. Procédé selon l'une des revendications 2 ou 3, dans lequel au moins l'information secrète de clé prépartagée (220) correspond à ou est dérivée d'éléments d'information spécifiques au module d'identité d'abonné de l'élément de module d'identité d'abonné (10) sous forme chiffrée, dans lequel en particulier le chiffrement des éléments d'information spécifiques au module d'identité d'abonné est effectué en utilisant une information de clé secrète connue à la fois du fabricant de l'élément de module d'identité d'abonné (10) et d'au moins l'un de l'entité serveur d'amorçage (140) et du réseau de communication mobile (100) .

5. Procédé selon l'une des revendications précédentes, dans lequel le stockage de l'information d'identificateur de clé prépartagée (210) et de l'information secrète de clé prépartagée (220) sur l'élément de module d'identité d'abonné (10) a lieu lors de la fabrication de l'élément de module d'identité d'abonné (10),
dans lequel en particulier l'information d'identificateur de clé prépartagée (210) et l'information secrète de clé prépartagée (220) correspondent à des structures de données PKCS#15.

6. Procédé selon l'une des revendications précédentes, dans lequel, dans une quatrième étape, consécutive à la troisième étape, lors de l'authentification initiale du dispositif de communication client (20), l'information d'identificateur de dispositif (201) est associée, dans l'entité serveur d'amorçage (140), à l'information d'identificateur de clé prépartagée (210), et une authentification subséquente du dispositif de communication client (20) - notamment pour communiquer de manière opérationnelle avec le réseau de communication mobile (100) - nécessite la transmission de l'information d'identificateur de dispositif (201) et de l'information d'identificateur de clé prépartagée (210) à l'entité serveur d'amorçage (140).

7. Procédé selon l'une des revendications précédentes, dans lequel, lors de la troisième étape, une liaison de communication initiale ou temporaire est utilisée pour connecter préalablement le dispositif de communication client (20) à l'entité serveur d'amorçage (140).

8. Procédé selon l'une des revendications précédentes, dans lequel, afin de transmettre l'information d'identificateur de dispositif (201) ainsi que l'information d'identificateur de clé prépartagée (210) et/ou l'information secrète de clé prépartagée (220) à partir du dispositif de communication client (20) à l'entité serveur d'amorçage (140), la troisième étape comprend les sous-étapes suivantes :
- dans une première sous-étape, l'entité serveur d'amorçage (140), à la réception de l'information d'identificateur de clé prépartagée (210), identifie ou recherche l'information d'identificateur de clé prépartagée (210), et - dans le cas où l'information d'identificateur de clé prépartagée (210) est identifiée ou trouvée -,
- dans une deuxième sous-étape, l'entité serveur d'amorçage (140), à la réception de l'information secrète de clé prépartagée (220), vérifie l'information secrète de clé prépartagée (220) associée à l'information d'identificateur de clé prépartagée (210), dans lequel le dispositif de communication client (20) et/ou le module d'identité d'abonné (21) dans le dispositif de communication client (20) sont initialement authentifiés par l'entité serveur d'amorçage (140) dans le cas où l'information secrète de clé prépartagée (220) est également vérifiée.

9. Procédé selon l'une des revendications précédentes, dans lequel le dispositif de communication client (20) est un dispositif mobile ou un dispositif de communication de type machine ou un dispositif de communication de l'Internet des objets ou un dispositif de communication de machine à machine, et dans lequel l'information d'identificateur de dispositif (201) est spécifique au dispositif de communication client (20).

10. Système d'authentification initiale, par rapport à une entité serveur d'amorçage (140) d'un réseau de communication mobile (100), d'un dispositif de communication client (20) et/ou d'un module d'identité d'abonné (21) dans le dispositif de communication client (20), dans lequel après l'authentification initiale, le dispositif de communication client (20) est activé ou initialisé pour communiquer de manière opérationnelle avec le réseau de communication mobile (100), dans lequel une information d'identificateur de dispositif (201) est attribuée au dispositif de communication client (20), dans lequel le système est configuré de telle sorte que :
- une information d'identificateur de clé prépartagée (210) est stockée dans un élément de module d'identité d'abonné (10) ainsi que transmise à l'entité serveur d'amorçage (140),
- l'élément de module d'identité d'abonné (10) est associé ou intégré ou attribué au dispositif de communication client (20) en tant que module d'identité d'abonné (21) de celui-ci,
- le dispositif de communication client (20) avec son module d'identité d'abonné (21) communique initialement avec l'entité serveur d'amorçage (140) et transmet l'information d'identificateur de dispositif (201) et l'information d'identificateur de clé prépartagée (210) à l'entité serveur d'amorçage (140), dans lequel le dispositif de communication client (20) et/ou le module d'identité d'abonné (21) dans le dispositif de communication client (20) sont initialement authentifiés par l'entité serveur d'amorçage (140) dans le cas où l'information d'identificateur de clé prépartagée (210) est vérifiée par l'entité serveur d'amorçage (140),
dans lequel l'information d'identificateur de clé prépartagée (210) correspond à ou est dérivée d'un ou d'une pluralité d'éléments d'information spécifiques au module d'identité d'abonné de l'élément de module d'identité d'abonné (10), ou comprend au moins une partie de ces éléments, dans lequel les éléments d'information spécifiques au module d'identité d'abonné de l'élément de module d'identité d'abonné (10) comprennent les éléments d'information suivants :
- le premier numéro d'identification personnel, PIN1, de l'élément de module d'identité d'abonné (10),
- le deuxième numéro d'identification personnel, PIN2, de l'élément de module d'identité d'abonné (10),
- la première clé de déblocage personnelle, PUK1, de l'élément de module d'identité d'abonné (10),
- la deuxième clé de déblocage personnelle, PUK2, de l'élément de module d'identité d'abonné (10),
- les informations internationales d'abonné mobile(International Mobile Subscriber Information, IMSI) de l'élément de module d'identité d'abonné (10),
- l'identificateur de carte à circuit intégré (Integrated Circuit Card Identifier, ICCID) de l'élément de module d'identité d'abonné (10),
- le numéro d'annuaire international d'abonné de station mobile(Mobile Station International Subscriber Directory Number, MSISDN) de l'élément de module d'identité d'abonné (10).

11. Dispositif de communication client (20) pour une authentification initiale, par rapport à une entité serveur d'amorçage (140) d'un réseau de communication mobile (100), du dispositif de communication client (20) et/ou d'un module d'identité d'abonné (21) dans le dispositif de communication client (20), dans lequel après l'authentification initiale, le dispositif de communication client (20) est activé ou initialisé pour communiquer de manière opérationnelle avec le réseau de communication mobile (100), dans lequel une information d'identificateur de dispositif (201) est attribuée au dispositif de communication client (20),
dans lequel le dispositif de communication client (20) est configuré de telle sorte que :
- une information d'identificateur de clé prépartagée (210) est stockée dans un élément de module d'identité d'abonné (10) ainsi que transmise à l'entité serveur d'amorçage (140),
- l'élément de module d'identité d'abonné (10) est associé ou intégré ou attribué au dispositif de communication client (20) en tant que module d'identité d'abonné (21) de celui-ci,
- le dispositif de communication client (20) avec son module d'identité d'abonné (21) communique initialement avec l'entité serveur d'amorçage (140) et transmet l'information d'identificateur de dispositif (201) et l'information d'identificateur de clé prépartagée (210) à l'entité serveur d'amorçage (140), dans lequel le dispositif de communication client (20) et/ou le module d'identité d'abonné (21) dans le dispositif de communication client (20) sont initialement authentifiés par l'entité serveur d'amorçage (140) dans le cas où l'information d'identificateur de clé prépartagée (210) est vérifiée par l'entité serveur d'amorçage (140),
dans lequel l'information d'identificateur de clé prépartagée (210) correspond à ou est dérivée d'un ou d'une pluralité d'éléments d'information spécifiques au module d'identité d'abonné de l'élément de module d'identité d'abonné (10), ou comprend au moins une partie de ces éléments, dans lequel les éléments d'information spécifiques au module d'identité d'abonné de l'élément de module d'identité d'abonné (10) comprennent les éléments d'information suivants :
- le premier numéro d'identification personnel, PIN1, de l'élément de module d'identité d'abonné (10),
- le deuxième numéro d'identification personnel, PIN2, de l'élément de module d'identité d'abonné (10),
- la première clé de déblocage personnelle, PUK1, de l'élément de module d'identité d'abonné (10),
- la deuxième clé de déblocage personnelle, PUK2, de l'élément de module d'identité d'abonné (10),
- les informations internationales d'abonné mobile(International Mobile Subscriber Information, IMSI) de l'élément de module d'identité d'abonné (10),
- l'identificateur de carte à circuit intégré (Integrated Circuit Card Identifier, ICCID) de l'élément de module d'identité d'abonné (10),
- le numéro d'annuaire international d'abonné de station mobile (Mobile Station International Subscriber Directory Number, MSISDN) de l'élément de module d'identité d'abonné (10).

12. Entité de serveur d'amorçage (140) pour l'authentification initiale d'un dispositif de communication client (20) et/ou d'un module d'identité d'abonné (21) dans le dispositif de communication client (20), dans laquelle après l'authentification initiale, le dispositif de communication client (20) est activé ou initialisé pour communiquer de manière opérationnelle avec le réseau de communication mobile (100), dans laquelle une information d'identificateur de dispositif (201) est attribuée au dispositif de communication client (20),
dans laquelle l'entité serveur d'amorçage (140) est configurée de telle sorte que :
- une information d'identificateur de clé prépartagée (210) est stockée dans un élément de module d'identité d'abonné (10) ainsi que transmise à l'entité serveur d'amorçage (140),
- l'élément de module d'identité d'abonné (10) est associé ou intégré ou attribué au dispositif de communication client (20) en tant que module d'identité d'abonné (21) de celui-ci,
- le dispositif de communication client (20) avec son module d'identité d'abonné (21) communique initialement avec l'entité serveur d'amorçage (140) et transmet l'information d'identificateur de dispositif (201) et l'information d'identificateur de clé prépartagée (210) à l'entité serveur d'amorçage (140), dans lequel le dispositif de communication client (20) et/ou le module d'identité d'abonné (21) dans le dispositif de communication client (20) sont initialement authentifiés par l'entité serveur d'amorçage (140) dans le cas où l'information d'identificateur de clé prépartagée (210) est vérifiée par l'entité serveur d'amorçage (140),
dans lequel l'information d'identificateur de clé prépartagée (210) correspond à ou est dérivée d'un ou d'une pluralité d'éléments d'information spécifiques au module d'identité d'abonné de l'élément de module d'identité d'abonné (10), ou comprend au moins une partie de ces éléments, dans lequel les éléments d'information spécifiques au module d'identité d'abonné de l'élément de module d'identité d'abonné (10) comprennent les éléments d'information suivants :
- le premier numéro d'identification personnel, PIN1, de l'élément de module d'identité d'abonné (10),
- le deuxième numéro d'identification personnel, PIN2, de l'élément de module d'identité d'abonné (10),
- la première clé de déblocage personnelle, PUK1, de l'élément de module d'identité d'abonné (10),
- la deuxième clé de déblocage personnelle, PUK2, de l'élément de module d'identité d'abonné (10),
- les informations internationales d'abonné mobile (International Mobile Subscriber Information, IMSI) de l'élément de module d'identité d'abonné (10),
- l'identificateur de carte à circuit intégré (Integrated Circuit Card Identifier, ICCID) de l'élément de module d'identité d'abonné (10),
- le numéro d'annuaire international d'abonné de station mobile (Mobile Station International Subscriber Directory Number, MSISDN) de l'élément de module d'identité d'abonné (10).

13. Programme comprenant un code de programme lisible par ordinateur, qui, lorsqu'il est exécuté sur un ordinateur et/ou sur un dispositif de communication client (20) et/ou sur une entité serveur d'amorçage (140) et/ou sur un nœud de réseau d'un réseau de communication mobile (100), ou en partie sur un dispositif de communication client (20) et/ou en partie sur une entité serveur d'amorçage (140) et/ou en partie sur un nœud de réseau d'un réseau de communication mobile (100), amène l'ordinateur et/ou le dispositif de communication client (20) et/ou l'entité serveur d'amorçage (140) et/ou le nœud de réseau du réseau de communication mobile (100) à exécuter un procédé selon l'une des revendications 1 à 9.

14. Support lisible par ordinateur comprenant des instructions qui, lorsqu'elles sont exécutées sur un ordinateur et/ou sur un dispositif de communication client (20) et/ou sur une entité serveur d'amorçage (140) et/ou sur un nœud de réseau d'un réseau de communication mobile (100), ou en partie sur un dispositif de communication client (20) et/ou en partie sur une entité serveur d'amorçage (140) et/ou en partie sur un nœud de réseau d'un réseau de communication mobile (100), amènent l'ordinateur et/ou le dispositif de communication client (20) et/ou l'entité serveur d'amorçage (140) et/ou le nœud de réseau du réseau de communication mobile (100) à exécuter un procédé selon l'une des revendications 1 à 9.
